# EUROPEAN PATENT APPLICATION

(11) **EP 3 639 677 A1**
(43) Date of publication of application: **22.04.2020**
(21) Application number: 18827718.0
(22) Date of filing: 29.06.2018
(51) Int. Cl.: A23L 27/10, A23L 27/12

(54) **INGREDIENT-CONTAINING LIQUID SEASONING**

(30) Priority: 04.07.2017 JP 2017131024
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: OHIKE Masaki, Handa-shi Aichi 475-8585 (JP)
(74) Representative: Mewburn Ellis LLP
(86) International application number: PCT/JP2018/024952
(87) International publication number: WO 2019/009218

(57) **Abstract**

An object of the present invention is to provide an ingredient-containing liquid seasoning which has food texture peculiar to a grated or pureed ingredient and which is free from discoloration and off-flavors occurring with time during preservation. According to the present invention, an ingredient-containing liquid seasoning comprising a water-insoluble dietary fiber and a fruit juice and/or a vegetable juice, wherein a content of the water-insoluble dietary fiber in the liquid seasoning is 0.25% to 15% by mass, and a content ratio between the water-insoluble dietary fiber and the fruit juice and/or the vegetable juice is within a range of 1:1 to 1:100 in terms of mass ratio is provided.

## Description

### Technical Field

The present invention relates to an ingredient-containing liquid seasoning which has food texture peculiar to a grated or pureed ingredient and which is free from change in color and smell over time.

### Background Art

Conventionally, seasonings having various tastes or forms have been used in salads or prepared foods. Among others, in the case of a liquid seasoning containing ingredients such as grated vegetables or finely chopped vegetables in its seasoning liquid, since ingredients have previously been added into a seasoning liquid, time and effort for preparing ingredients separately, mixing them with a seasoning liquid, and cooking the resultant mixture, for example, by heating the mixture, can be saved. In addition, diversifying preferences of consumers are satisfied by varying ingredients.

For ingredient-containing liquid seasonings, the food texture of ingredients is important in addition to taste and flavor that are required of usual liquid seasonings. As a design for imparting various types of food texture peculiar to respective ingredients, an ingredient-containing seasoning containing a solid ingredient and a grated or pureed ingredient such as grated radish or apple puree has been proposed. For example, a liquid seasoning to which fresh feeling and flavor, which are peculiar to grated vegetables and cannot be provided by dried vegetables alone, are imparted by using grated vegetables and dried vegetables in combination (Patent Literature 1) and a mashed vegetable seasoning liquid including an ingredient remaining on a sieve with a mesh size of 2 mm and a liquid part containing a quite small solid or paste-like material which passes through a sieve with a mesh size of 2 mm (Patent Literature 2) have been proposed. However, ingredients such as grated radish and an apple puree are likely to discolor or emit off-flavors with time, and adjustment of the taste of a seasoning liquid is required.

### Citation List

### Patent Literature

Patent Literature 1: JP Patent Publication (Kokai) No. 11-130 A (1999)
Patent Literature 2: JP Patent Publication (Kokai) No. 2013-39097 A

### Summary of Invention

### Technical Problem

An object of the present invention is to provide an ingredient-containing liquid seasoning which has food texture peculiar to a grated or pureed ingredient and which is free from discoloration and off-flavors occurring with time during preservation.

### Solution to Problem

The present inventor conducted intensive studies to achieve the above-described object. As a result, the present inventor has found that food texture peculiar to a grated or pureed ingredient such as grated vegetables or a fruit/vegetable puree is obtained by an ingredient-containing liquid seasoning containing a certain amount of a fruit juice and/or a vegetable juice relative to a water-insoluble dietary fiber and that when the ingredient-containing liquid seasoning also contains a solid ingredient, the food texture of the solid ingredient is enhanced. In addition, the present inventor has found that discoloration and off-flavors, which are likely to occur with time in a seasoning using grated vegetables or a fruit/vegetable puree, are suppressed, and the present invention has been completed thereby.

Specifically, the present invention encompasses the following inventions.
(1) An ingredient-containing liquid seasoning, comprising: a water-insoluble dietary fiber; and a fruit juice and/or a vegetable juice, wherein a content of the water-insoluble dietary fiber in the liquid seasoning is 0.25% to 15% by mass, and a content ratio between the water-insoluble dietary fiber and the fruit juice and/or the vegetable juice is within a range of 1:1 to 1:100 in terms of mass ratio.
(2) The ingredient-containing liquid seasoning according to (1), wherein the water-insoluble dietary fiber is cellulose or bean curd lees powder.
(3) The ingredient-containing liquid seasoning according to (1) or (2), further comprising a solid ingredient.
(4) The ingredient-containing liquid seasoning according to (3), wherein the solid ingredient is a dried ingredient.
(5) The ingredient-containing liquid seasoning according to (3) or (4), wherein the solid ingredient is contained at a content of 5% to 60% by mass based on the total seasoning in terms of wet weight.
(6) A method for improving food texture of an ingredient-containing liquid seasoning, comprising allowing a water-insoluble dietary fiber and a fruit juice and/or a vegetable juice to be contained in the ingredient-containing liquid seasoning so that a content of the water-insoluble dietary fiber in the ingredient-containing liquid seasoning is 0.25% to 15% by mass and a content ratio between the water-insoluble dietary fiber and the fruit juice and/or the vegetable juice is within a range of 1:1 to 1:100 in terms of mass ratio.
(7) A method for suppressing change of an ingredient-containing liquid seasoning over time during preservation, comprising allowing a water-insoluble dietary fiber and a fruit juice and/or a vegetable juice to be contained in the ingredient-containing liquid seasoning so that a content of the water-insoluble dietary fiber in the ingredient-containing liquid seasoning is 0.25% to 15% by mass and a content ratio between the water-insoluble dietary fiber and the fruit juice and/or the vegetable juice is within a range of 1:1 to 1:100 in terms of mass ratio.

The present description includes part or all of the contents as disclosed in the description and/or drawings of Japanese Patent Application No. 2017-131024 filed on July 4, 2017, which is a priority document of the present application.

### Advantageous Effects of Invention

According to the present invention, an ingredient-containing liquid seasoning having food texture peculiar to a grated or pureed ingredient (food texture with crispy fibrous texture as in grated apples and food texture with mild and pleasant in mouthfeel), with the food texture of a solid ingredient (crunchy texture as in cut onions) enhanced is provided. The ingredient-containing liquid seasoning of the present invention is free from occurrence of discoloring and off-flavors during preservation, which has been observed in conventional liquid seasonings using ingredients such as grated radish and an apple puree, and sufficiently provides a flavor derived from its ingredient.

### Description of Embodiments

The ingredient-containing liquid seasoning of the present invention (hereinafter referred to as "the liquid seasoning of the present invention") is an ingredient-containing liquid seasoning which comprises a water-insoluble dietary fiber and a fruit juice and/or a vegetable juice, contains the water-insoluble dietary fiber at a predetermined amount, with a content ratio between the water-insoluble dietary fiber and the fruit juice and/or the vegetable juice being a predetermined ratio, and has food texture peculiar to a grated or pureed ingredient. The "food texture peculiar to a grated or pureed ingredient" of the liquid seasoning of the present invention refers to food texture with fibrous texture like grated fruits or vegetables (crispy texture, feeling on the tongue provided by grated apples, for example) and smooth and mild food texture like pureed fruits or vegetables, which are felt when the liquid seasoning is eaten.

### <Liquid seasoning>

The "liquid seasoning" in the present invention refers to a seasoning having flowability and used for bringing out the deliciousness of dishes and food materials. Examples of the liquid seasoning of the present invention include dripping, sauce, soup broth, and *ponzu* sauce besides a dressing to be poured on vegetables, meat, seafood, or the like for seasoning.

### <Ingredient>

In the present invention, the "ingredient" refers to a solid ingredient, a powdered ingredient, a finely ground ingredient, a grated ingredient, a paste-like ingredient, or a water-insoluble dietary fiber.

### <Water-insoluble dietary fiber>

In the present invention, the "water-insoluble dietary fiber" refers to a dietary fiber insoluble in water and dispersed in a liquid, and examples thereof include cellulose, hemicellulose, lignin, and insoluble pectin. Examples of the water-insoluble dietary fiber used in the present invention include cellulose obtained by purifying pulp or the like as a raw material. Any type of cellulose including powdered cellulose, in which cellulose is dried to have a powdered state, and cellulose having been physically or chemically treated (for example, crystalline cellulose in which a crystal structure is observed and fibrous cellulose in which cellulose has been processed to have a fibrous state) may be used. However, powdered cellulose is preferable. In addition, in the present invention, products obtained by purifying plants such as cereals, beans, fruits, and vegetables as a raw material may be used as the water-insoluble dietary fiber besides the above-described cellulose, and the examples thereof include soybean fibers (bean curd lees powder, roasted soybean flour, etc.), bran (wheat bran, barley bran, rye bran, oats bran, etc.), fibrous components obtained from beans such as peas, chickpeas, and kidney beans, corn fibers, beat fibers, potato fibers, and fruit pulp of apple, orange, etc. These water-insoluble dietary fibers may be used alone as a single type, but two or more types thereof may be used in combination.

The content of the water-insoluble dietary fiber in the liquid seasoning of the present invention is 0.25% to 15% by mass, preferably 0.5% to 12% by mass, and more preferably 2% to 10% by mass. A content of the water-insoluble dietary fiber within the above range is preferable because food texture with fibrous texture like grated fruits or vegetables is obtained. A content of the water-insoluble dietary fiber exceeding 15% by mass is not preferable because smooth and mild food texture like pureed fruits or vegetables is not obtained, and roughness is felt. In addition, a content of the water-insoluble dietary fiber less than 0.25% by mass is not preferable because food texture with fibrous texture like grated fruits or vegetables is weak.

### <Fruit juice or vegetable juice>

In the present invention, the "fruit juice" refers to a squeezed liquid of a fruit or a liquid part of a fruit obtained by extraction or the like, and when a puree or a grated product obtained by pureeing or grating a fruit is used, refers to a liquid part thereof. Examples of the fruit juice used for the liquid seasoning of the present invention include fruit juices derived from apple, peach, grape, acerola, blueberry, pear, lemon, *yuzu, sudachi,* lime, orange, grape fruit, strawberry, banana, melon, kiwi, pineapple, cassis, apricot, guava, plum, mango, papaya, lychee, etc. Among them, juices of apple, peach, grape, acerola, blueberry, and pear or juices of citruses such as lemon, *yuzu, sudachi,* lime, orange, and grape fruit are more preferable. These fruit juices can be used alone or in combination of two or more types. In addition, the above-described fruit juice can also be used after being subjected to processing such as freezing, concentration, or reduction.

In the present invention, the "vegetable juice" refers to a product obtained by crushing or the like a vegetable and squeezing it, and when a puree or a grated product obtained by pureeing or grating a vegetable is used, refers to a liquid part thereof. Examples of the vegetable juice used for the liquid seasoning of the present invention include vegetable juices derived from vegetables which can be squeezed, for example, from root vegetables such as onions, radishes, and carrots; fruit vegetables such as tomatoes, green bell peppers, bell peppers, cucumbers, and eggplants; leaf vegetables such as cabbages, lettuces, spinaches, Chinese cabbages, celeries, Japanese Mustard Spinaches, qing geng cai, mulukhiyah, kales, Japanese basil leaves, leeks, and parsleys; stalk vegetables such as asparagus and bamboo shoots; and flower vegetables such as broccolis and cauliflowers. Among them, onions and radishes are more preferable. These vegetable juices can be used alone or in combination of two or more types.

In the liquid seasoning of the present invention, the content ratio between the water-insoluble dietary fiber and the fruit juice and/or the vegetable juice is 1:1 to 1:100, preferably 1:5 to 1:50, and more preferably 1:10 to 1:25 in terms of mass ratio. A content ratio between the water-insoluble dietary fiber and the fruit juice and/or the vegetable juice within the above-described range is preferable because food texture with fibrous texture like grated fruits or vegetables is likely to be obtained. A content ratio of the fruit juice and/or the vegetable juice to the water-insoluble dietary fiber exceeding the above-described content ratio range is not preferable because food texture with fibrous texture like grated fruits or vegetables weakens. In addition, a content ratio of the fruit juice and/or the vegetable juice to the water-insoluble dietary fiber lower than the above-described content ratio range is not preferable because smooth and mild food texture like pureed fruits or vegetables is not obtained, and roughness of fibers is likely to be felt.

### <Solid ingredient>

The liquid seasoning of the present invention can also contain a solid ingredient. When the liquid seasoning of the present invention contains a solid ingredient, the food texture of the solid ingredient is enhanced by the above-described fibrous component. In the present invention, the "solid ingredient" refers to a solid ingredient which is different from a grated ingredient or a paste ingredient obtained by mixing the water-insoluble dietary fiber and the fruit juice and/or the vegetable juice as described above, has a certain level of size (for example, 3 mm or more), and provides food texture of the solid ingredient (for example, crunchy texture in the case of onions). The "solid ingredient" used in the liquid seasoning of the present invention may be any of a raw ingredient, a salted ingredient, and a dried ingredient, but a dried ingredient is preferable.

The solid ingredient may have any shape such as a rectangular solid, cube (dice), spherical, or granular shape. In addition, with respect to the size of the solid ingredient, in the case where the solid ingredient has a rectangular solid shape, for example, the longest side length of the ingredient after swelling in a seasoning liquid is preferably 1 to 60 mm, more preferably 1 to 20 mm, still more preferably 2 to 20 mm, and most preferably 4 to 20 mm. When the size of the ingredient after swelling is less than 1 mm, the food texture of the solid ingredient is not obtained. In addition, when the size of the ingredient after swelling exceeds 60 mm, it is difficult to obtain the food texture of the solid ingredient.

The content of the solid ingredient in the liquid seasoning of the present invention is 5% to 60% by mass, preferably 10% to 50% by mass, and more preferably 10% to 40% by mass based on the total seasoning in terms of wet weight. When the content of the ingredient is less than 5% by mass in terms of wet weight, the food texture of the solid ingredient is not sufficiently obtained. In addition, when the content of the ingredient exceeds 60% by mass in terms of wet weight, while the flavor of the ingredient itself and the flavor of the liquid seasoning become good, grated-like food texture and the effect of the fibrous component to enhance the food texture of the solid ingredient are not sufficiently obtained.

In the case where the solid ingredient used in the liquid seasoning of the present invention is a vegetable, although the type of the vegetable is not particularly limited, examples of the vegetable include onions, cabbages, Chinese cabbages, carrots, green bell peppers, radishes, radish leaves, beets, lotus roots, burdocks, green onions, Japanese basil leaves, celeries, parsleys, bell peppers, tomatoes, cucumbers, corns, cauliflowers, eggplants, potatoes, sweet potatoes, taros, yams, and pumpkins. Among them, onions, cabbages, Chinese cabbages, carrots, green onions, celeries, and bell peppers are preferable, and onions, cabbages, Chinese cabbages, and carrots are more preferable. These vegetables can be used alone or in combination of two or more types.

Examples of the solid ingredient other than vegetables include fruits (lemon, *yuzu, sudachi,* lime, orange, grape fruit, apple, pineapple, peach, grape, strawberry, pear, banana, melon, kiwi, cassis, acerola, blueberry, apricot, guava, plum, mango, papaya, lychee, etc.), seeds and nuts (almond, peanut, pine nut, coconut, etc.), mushrooms (*shimeji* mushroom, *shiitake* mushroom, western mushroom, king oyster mushroom, *maitake* mushroom, etc.), and beans (soybean, pea, lentil, chickpea, Egyptian bean, etc.).

In the case where the solid ingredient to be contained in the liquid seasoning of the present invention is a dried vegetable, the water content of the dried vegetable is preferably 8% by mass or less, more preferably 6% by mass or less, and still more preferably 5% by mass or less from the viewpoint of preventing excess water from transferring to the seasoning liquid.

The above-described dried vegetable may also be prepared by mixing a vegetable before drying with sugar, or by immersing a vegetable before drying in a sugar-containing solution, followed by heat-mixing. Specifically, examples of the sugar include glucose, fructose, sucrose, lactose, and starch hydrolysate. Two or more types of the sugar may also be used. The amount of sugar to be added, mixing time, the concentration of sugar in the case of immersing a vegetable in a sugar-containing solution, the temperature and time for the heat-mixing operation, and the temperature and time for the subsequent drying operation may be arbitrarily selected depending on the type and size of the vegetable, etc. However, the amount of the sugar to be added in the case of mixing a vegetable with the sugar is preferably 5% to 30% by mass based on the mass of the dried vegetable, the concentration of the sugar in the case of immersing a vegetable in a sugar-containing solution is preferably 5% to 30% by mass, and the conditions for the heat-mixing in the solution are preferably a temperature of 50°C to 80°C and a period of time of 10 minutes to 12 hours.

Moreover, the above-described dried vegetable may also be produced by heat-mixing a cut vegetable in a calcium salt solution and then drying it. The concentration of the calcium salt solution, the temperature and time for the heat-mixing operation, and the temperature and time for the subsequent drying operation may be arbitrarily selected depending on the type and size of the vegetable, etc. Specifically, the dried vegetable may be produced by stirring a cut vegetable in an aqueous solution prepared by dissolving a calcium salt such as calcium chloride, calcium lactate, or calcium acetate in water to have a concentration of 0.5% to 5% by mass, at 50°C to 80°C for 1 to 120 minutes, then separating the vegetable from the treatment solution to remove liquid, and then drying the resultant vegetable at 65°C to 80°C for 3 to 12 hours. The above-described calcium aqueous solution may also contain sugar such as glucose, fructose, sucrose, lactose, or starch hydrolysate in an amount of 5% to 30% by mass.

The above-described dried vegetable can be produced by cutting a vegetable to a predetermined size and then drying the vegetable, or by drying a vegetable and then cutting the vegetable. Examples of the drying method include hot air drying, freeze drying, vacuum heat drying, microwave drying, sun drying, and natural drying.

### <Other raw materials>

In addition to the above-described raw materials, the liquid seasoning of the present invention can contain raw materials for a seasoning, etc. used in a common liquid seasoning depending on its type. The liquid seasoning of the present invention may be any type of liquid seasonings including an oil-free type containing fat/oil, an oil-reduced type (10% by weight or less) in which a fat/oil content is reduced, and an oily type containing a fat/oil (including an emulsified type and a separation type). However, an oil-free type is preferable because rich flavor is obtained by the addition of the fruit juice and/or the vegetable juice and the water-insoluble dietary fiber. For example, when the liquid seasoning of the present invention is an oil-free type dressing, basic raw materials thereof are generally water, vinegar, sugar (including a high-intensity sweetener), and common salt. In addition to such basic raw materials, taste/flavor components such as a spice, a spice extract, a flavor oil, an amino acid-based seasoning, a nucleic acid-based seasoning, an organic acid-based seasoning, a fermented seasoning (a flavoring material, an *umami* seasoning), a liquor, and a flavor; additives such as a viscosity adjuster, a stabilizer, a coloring agent, and a calcium salt; and the like may be used in the liquid seasoning of the present invention. The contents of these components are not particularly limited, and can be appropriately determined depending on intended use.

Examples of the above-described vinegar include a brewed vinegar produced using a cereal such as rice or wheat or a fruit juice as a main raw material and a synthetic vinegar obtained by adding a seasoning such as sugar to a diluted solution of glacial acetic acid or acetic acid or by adding a brewed vinegar to a diluted solution of glacial acetic acid or acetic acid. Both of the brewed vinegar and the synthetic vinegar can be used in the present invention. Examples of the brewed vinegar include grain vinegar (rice vinegar, brown rice vinegar, black vinegar, *sake* lees vinegar, malt vinegar, adlay vinegar, soybean vinegar, etc.); fruit vinegar (apple vinegar, grape vinegar, lemon vinegar, *kabosu* vinegar, *ume* vinegar, wine vinegar, balsamic vinegar, etc.); an alcoholic vinegar produced by acetic acid fermentation using ethanol as a raw material; Chinese vinegar; and Sherry vinegar. Examples of the synthetic vinegar include glacial acetic acid or acetic acid appropriately diluted with water. Among them, an alcoholic vinegar and a synthetic vinegar in which an acetic acid content is high, flavor originating from raw material is weak, and an acetic acid concentration is high are preferable. In addition, these vinegars may be used alone, and two or more types thereof may be used in combination.

Examples of the above-described sugar include sucrose, maltose, fructose, isomerized glucose syrup, glucose, starch syrup, dextrin, and sugar alcohols such as sorbitol, maltitol, and xylitol. These sugars may be used alone as a single type, or may also be used in any given combination of two or more types at any given ratio.

Examples of the above-described high-intensity sweetener include aspartame, acesulfame potassium, sucralose, neotame, licorice extract, stevia, and an enzyme-treated product thereof. These high-intensity sweeteners may be used alone as a single type, or may also be used in any given combination of two or more types at any given ratio.

The above-described common salt may be directly used, or may also be a food product containing common salt. While the food product containing common salt is not particularly limited, examples thereof include soy sauce, *miso* (soybean paste), and soup stock.

While the above-described soy sauce is not particularly limited, examples thereof include *koikuchi* (dark-colored) soy sauce, *usukuchi* (light-colored) soy sauce, white soy sauce, *tamari* (rich-tasting) soy sauce, and *saishikomi* (refermented) soy sauce. These soy sauces may be used alone as a single type, or may also be used in any given combination of two or more types at any given ratio.

While the above-described *miso* is not particularly limited, examples thereof include barley *miso,* rice *miso,* bean *miso,* and mixed *miso* as well as *aka miso* (dark brown *miso*), *shiro miso* (white *miso*), and *tanshoku miso* (light colored *miso*), which are named based on the color difference caused by the production method thereof. These types of *miso* may be used alone as a single type, or may also be used in any given combination of two or more types at any given ratio.

The above-described spice refers to one type of seasoning which utilizes a part of a plant body (the fruit, pericarp, flower, bud, bark, stalk, leaf, seed, root, rhizome, etc., of a plant) which has a unique flavor, stimulating taste, and color tone and which is to be mixed into food and beverage for the purpose of aromatization, deodorization, seasoning, coloration, etc. Examples of the spice include herb. The examples of the spice include pepper (black pepper, white pepper, and red pepper), garlic, ginger, sesame (sesame seeds), capsicum, horseradish (*Armoracia rusticana*), mustard, poppy seeds, nutmeg, cinnamon, paprika, cardamom, cumin, saffron, allspice, clove, Japanese pepper, orange peel, fennel, licorice, fenugreek, Dill seed, Sichuan pepper, long pepper, and olive fruit. In addition, among the spices, the herb means one utilizing stalks, leaves, and flowers, and examples thereof include watercress, coriander, Japanese basil, celery, tarragon, chives, chervil, sage, thyme, laurel, leek, parsley, mustard green (*Brassica juncea*), Japanese ginger, mugwort, basil, oregano, rosemary, peppermint, savory, lemon grass, Dill, Japanese horseradish leaves, and Japanese pepper leaves.

The above-described spice extract is not particularly limited, as long as it is an extract from food products, which is generally displayed as "spice," and examples thereof include capsicum extract, mustard extract, ginger extract, Japanese horseradish extract, pepper extract, garlic extract, onion extract, and Japanese pepper extract. These spice extracts may be used alone as a single type, or may also be used in any given combination of two or more types at any given ratio.

Examples of the above-described flavor oil include ginger oil, garlic oil, mustard oil, onion oil, sesame oil, green onion oil, leek oil, water dropwort Japanese parsley oil, Japanese basil oil, Japanese horseradish oil, lemon oil, seafood oil, and meat oil. These flavor oils may be used alone as a single type, or may also be used in any given combination of two or more types at any given ratio.

Examples of the above-described amino acid-based seasoning include L-sodium glutamate, DL-alanine, glycine, L- or DL-tryptophan, L-phenylalanine, L- or DL-methionine, L-lysine, L-aspartic acid, sodium L-aspartate, and L-arginine. These amino acid-based seasonings may be used alone as a single type, or may also be used in any given combination of two or more types at any given ratio.

Examples of the above-described nucleic acid-based seasoning include disodium 5'-inosinate, disodium 5'-guanylate, disodium 5'-uridylate, disodium 5'-cytidylate, calcium 5'-ribonucleotide, and disodium 5'-ribonucleotide. These nucleic acid-based seasonings may be used alone as a single type, or may also be used in any given combination of two or more types at any given ratio.

Examples of the above-described organic acid-based seasoning include calcium citrate, trisodium citrate, potassium gluconate, sodium gluconate, succinic acid, monosodium succinate, disodium succinate, sodium acetate, potassium DL-hydrogen tartrate, potassium L-hydrogen tartrate, sodium DL-tartrate, sodium L-tartrate, potassium lactate, calcium lactate, sodium lactate, monosodium fumarate, and sodium DL-malate. These organic acid-based seasonings may be used alone as a single type, or may also be used in any given combination of two or more types at any given ratio. The combined use of two or more types of the organic acid-based seasonings is preferable because the tastes of both seasonings are synergistically enhanced.

Examples of the above-described flavoring material include soup stock from dried and smoked bonito, kelp soup stock, vegetable extract, bonito extract, kelp extract, seafood extract, and meat extract. These flavoring materials may be used alone as a single type, or may also be used in any given combination of two or more types at any given ratio.

Examples of the above-described *umami* seasoning include protein hydrolysate and yeast extract. These *umami* seasonings may be used alone as a single type, or may also be used in any given combination of two or more types at any given ratio.

Examples of the above-described liquor include refined sake, synthetic refined sake, *mirin* (sweet cooking rice wine), *Shochu* (traditional Japanese distilled spirit), wine, liqueur, and Chinese (Shaoxing) rice wine. These liquors may be used alone as a single type, or may also be used in any given combination of two or more types at any given ratio.

Examples of the above-described flavor include ginger flavor, garlic flavor, mustard flavor, onion flavor, sesame flavor, green onion flavor, leek flavor, Japanese basil flavor, Japanese horseradish flavor, and lemon flavor. These flavors may be used alone as a single type, or may also be used in any given combination of two or more types at any given ratio.

Examples of the above-described viscosity adjuster include gum Arabic, alginic acid, sodium alginate, carrageenan, karaya gum, agar, locust bean gum, xanthan gum, guar gum, gellan gum, cellulose, tamarind seed gum, tara gum, tragacanth gum, pullulan, pectin, chitin, chitosan, and modified starch. These viscosity adjusters may be used alone as a single type, or may also be used in any given combination of two or more types at any given ratio.

### <Production method of ingredient-containing liquid seasoning>

The liquid seasoning of the present invention can be produced by a production method including a step of putting the above-described raw materials into water and mixing and stirring the resultant mixture while heating the resultant mixture as necessary. While the mixing and stirring of the raw materials may be performed by a conventional known method, a preferable temperature in the above-described mixing and stirring step is 20°C to 95°C. When the mixing is performed while heating the mixture, an upper limit of the heating temperature is preferably set at 90°C so as to suppress change in quality such as flavor and color. A homogeneous liquid obtained through the above-described steps is directly or after being subjected to sterilization treatment such as heat sterilization or pressurized sterilization, filled into a vessel, as in the case of common liquid seasonings. While the vessel used for the liquid seasoning of the present invention is not particularly limited in terms of its material or shape, examples thereof include a plastic-made vessel, a pouch (a polyethylene pouch or an aluminum pouch), a PET bottle, a steel can, an aluminum can, and a bottle vessel. In addition, the liquid seasoning of the present invention may be filled into a vessel, and then subjected to sterilization treatment such as heat sterilization or retort sterilization to produce a liquid seasoning.

### <Use modes of ingredient-containing liquid seasoning>

Use modes of the liquid seasoning of the present invention are not particularly limited, and the liquid seasoning of the present invention can be sprinkled over or mixed with food material such as vegetables, seafood, and meat, or dishes in use. While the food material or dishes may be any state including a heated state and an unheated state at the time of using the liquid seasoning of the present invention, the liquid seasoning of the present invention is preferably used for salads, cooked fried food, grilled food (steak, grilled fish), *tofu,* and the like in their unheated states.

### Examples

Hereinafter, the present invention will be more specifically described with examples. However, the present invention is not limited thereto.

### (Test Example 1) Studies regarding content of water-insoluble dietary fiber and content ratio between water-insoluble dietary fiber and fruit juice

### (1) Preparation of test products (Examples 1 to 8 and Comparative Examples 1 to 3)

Common raw materials including common salt, sugar, a brewed vinegar (acidity: 15%), and xanthan gum, bean curd lees powder (water-insoluble dietary fiber), and apple juice (fivefold concentrated) or apple puree were mixed with water according to the mixing ratios (% by mass) shown in Table 1. The resultant mixture was stirred to be homogeneous, subsequently subjected to sterilization treatment at 80°C for five minutes, and filled into a bottle to prepare an ingredient-containing liquid seasoning as a test product.

### (2) Sensory evaluation test

Sensory evaluation in terms of "food texture like grated apples (crispy texture)," "mildness in mouthfeel," and "sense of grated-like ingredients" was conducted on the ingredient-containing liquid seasoning of each of the test products. The sensory evaluation was carried out with a total of four inspectors trained for the sensory test, in accordance with the following evaluation criteria. In calculating the score in each evaluation item, a weighted average was calculated from the evaluation scores obtained by the four inspectors, and the obtained value was rounded off to two decimal places.

### (Food texture like grated apples)

5: Food texture with fibrous texture and juiciness like grated apples are felt very well
4: Food texture with fibrous texture and juiciness like grated apples are felt well
3: Food texture with fibrous texture and juiciness like grated apples are felt
2: Food texture with fibrous texture and juiciness like grated apples are poorly felt
1: Food texture with fibrous texture and juiciness like grated apples are not felt

### (Mildness in mouthfeel)

5: No roughness is felt, and mouthfeel is mild and good
4: No roughness is felt, and mouthfeel is slightly mild
3: No roughness is felt
2: Roughness is slightly felt
1: Roughness is felt

### (Sense of grated-like ingredients)

5: There is sufficient satisfaction in eating of grated-like ingredients
4: There is satisfaction in eating of grated-like ingredients
3: There is some satisfaction in eating of grated-like ingredients
2: There is poor satisfaction in eating of grated-like ingredients
1: There is no satisfaction in eating of grated-like ingredients

### (3) Preservation test

The ingredient-containing liquid seasonings of the test products were preserved at 10°C or 50°C for seven days and then returned to ordinary temperature. Samples preserved at 50°C were evaluated in terms of change in "color," "smell," and "flavor" compared to samples preserved at 10°C. The evaluation was carried out with a total of four inspectors trained for the evaluation, in accordance with the following evaluation criteria. In calculating the score in each evaluation item, a weighted average was calculated from the evaluation scores obtained by the four inspectors, and the obtained value was rounded off to two decimal places. Scores of three points or higher were regarded as being within an allowable range.

### (Change in color)

5: No discoloration occurs at all
4: Little discoloration occurs
3: Slight discoloration occurs
2: Discoloration occurs
1: Significant discoloration occurs

### (Change in smell)

5: No off-flavor is felt at all
4: Almost no off-flavor is felt
3: Off-flavor is slightly felt
2: Off-flavor is felt
1: Off-flavor is significantly felt

### (Change in flavor)

5: There is no change in flavor at all
4: There is little change in flavor
3: There is slight change in flavor
2: There is change in flavor
1: There is significant change in flavor

### (4) Test results

Respective results of the above-described test are shown in Table 1.

**[Table 1]**

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| <Raw materials> (% by mass) | | | | | | | | | | | |
| Common salt | 3 | 3 | 3 | 3 | 3 | 3 | 3 | 3 | 3 | 3 | 3 |
| Sugar | 20 | 20 | 20 | 20 | 20 | 20 | 20 | 20 | 20 | 20 | 20 |
| Brewed vinegar (acidity: 15%) | 10 | 10 | 10 | 10 | 10 | 10 | 10 | 10 | 10 | 10 | 10 |
| Xanthan gum | 0.3 | 0.3 | 0.3 | 0.3 | 0.3 | 0.3 | 0.3 | 0.3 | 0.3 | 0.3 | 0.3 |
| Bean curd lees powder | 0.5 | 1 | 2 | 4 | 8 | 10 | 12 | 4 | 0.2 | 20 | 0 |
| Apple juice (fivefold concentrated) | 10 | 10 | 10 | 8 | 8 | 5 | 2.4 | 8 | 10 | 4 | 0 |
| Apple puree^{(*1)} | - | - | - | - | - | - | - | 5 | - | - | 25 |
| Fruit juice in terms of straight condition | 50 | 50 | 50 | 40 | 40 | 25 | 12 | 44^{(*2)} | 50 | 20 | |
| Water | Appropriate amount | Appropriate amount | Appropriate amount | Appropriate amount | Appropriate amount | Appropriate amount | Appropriate amount | Appropriate amount | Appropriate amount | Appropriate amount | Appropriate amount |
| Total | 100 | 100 | 100 | 100 | 100 | 100 | 100 | 100 | 100 | 100 | 100 |
| Water-insoluble dietary fiber: fruit juice | 1:100 | 1:50 | 1:25 | 1:10 | 1:5 | 1:2.5 | 1:1 | 1:10 | 1:250 | 1:1 | - |

| <Sensory evaluation> | | | | | | | | | | | |
|---|---|---|---|---|---|---|---|---|---|---|---|
| Food texture like grated apples | 4 | 4.5 | 4.5 | 4.5 | 4 | 4 | 4 | 4.5 | 3 | 2.5 | 4 |
| Mildness in mouthfeel | 3.5 | 4.5 | 5 | 4.5 | 4 | 4 | 3.5 | 4.5 | 2 | 2.5 | 2 |
| Sense of grated-like ingredients | 3.5 | 3.5 | 5 | 5 | 4.5 | 4.5 | 4 | 5 | 2.5 | 4 | 2 |

| <Preservation test (50°C, seven days)> | | | | | | | | | | | |
|---|---|---|---|---|---|---|---|---|---|---|---|
| Color | 3.5 | 3.5 | 3.5 | 3.5 | 3.5 | 4 | 4 | 3 | 3.5 | 3.5 | 1 |
| Smell | 3 | 3 | 4 | 4 | 4 | 4 | 4 | 3.5 | 2 | 4 | 2 |
| Flavor | 4 | 4 | 4 | 4 | 4 | 4 | 4 | 3.3 | 2 | 4 | 1 |

| | | | | | | | | | | | |
|---|---|---|---|---|---|---|---|---|---|---|---|
| (*1) Fruit juice 90% by mass (*2) Fruit juice derived from an apple puree is included. | | | | | | | | | | | |

As shown in Table 1, the ingredient-containing liquid seasonings of Examples 1 to 7, each of which contained a water-insoluble dietary fiber (bean curd lees powder) and a fruit juice (apple juice), had a content of the water-insoluble dietary fiber (bean curd lees powder) of 0.5% to 12% by mass, and had a content ratio between the water-insoluble dietary fiber (bean curd lees powder) and the fruit juice (apple juice) ranging from 1:1 to 1:100, provided food texture like grated apples, mild mouthfeel, and satisfaction in eating of grated-like ingredients. In addition, discoloration, occurrence of off-flavor, and change in taste were little even after reservation. In addition, with respect to Example 8, in which an apple puree is partly used, the ingredient-containing liquid seasoning which contained a water-insoluble dietary fiber (bean curd lees powder) and a fruit juice (apple juice), had a content of the water-insoluble dietary fiber (bean curd lees powder) of 0.5% to 12% by mass, and had a content ratio between the water-insoluble dietary fiber (bean curd lees powder) and the fruit juice (apple juice) ranging from 1:1 to 1:100 provided food texture like grated apples, mild mouthfeel, and satisfaction in eating of grated-like ingredients even if a part of the fruit juice originated from a puree provided that in a range not to inhibit the effects of the present invention. In addition, discoloration, occurrence of off-flavor, and change in taste were within the allowable ranges even after reservation. On the other hand, in Comparative Example 1, in which the content of the water-insoluble dietary fiber is low, none of food texture, mouthfeel, and satisfaction in eating were sufficient. In addition, in Comparative Example 2, in which the content of the water-insoluble dietary fiber is high, mouthfeel is slightly unpleasant, and the ingredient-containing liquid seasoning was difficult to take out from the vessel and was difficult to use for topping because of its pasty state. In Comparative Example 3, which only included a conventional puree, change in color was observed soon after the production even though it was reserved in a refrigerated environment, and significant discoloration was observed at high temperature.

### (Test Example 2) Studies regarding type of water-insoluble dietary fiber and shape of vegetables

### (1) Preparation of test products (Examples 9 to 12 and Comparative Examples 4 to 7)

Common raw materials including apple vinegar, common salt, sugar, a brewed vinegar (acidity: 15%), and xanthan gum, a water-insoluble dietary fiber (bean curd lees powder, powdered cellulose A, or powdered cellulose B), and onions (juice, puree, or powder) or radishes (juice, grated product, or powder) were mixed with water according to the mixing ratios (% by mass) shown in Table 2. The resultant mixture was stirred to be homogeneous, subsequently subjected to sterilization treatment at 80°C for five minutes, and filled into a bottle to prepare an ingredient-containing liquid seasoning as a test product. As the powdered cellulose, W-50 (powdered cellulose A) and W-100 (powdered cellulose B), manufactured by Nippon Paper Chemicals Co., Ltd., were used.

### (2) Sensory evaluation test

With respect to the ingredient-containing liquid seasoning of each of the test products, sensory evaluation in terms of "food texture like grated vegetables (crispy texture)," "mildness in mouthfeel," and "sense of grated-like ingredients" was conducted on the seasoning liquid, and sensory evaluation in terms of "food texture of solid onions (crunchy texture)" was conducted on the entire seasoning. The sensory evaluation was carried out with a total of five inspectors trained for the sensory test, in accordance with the following evaluation criteria. In calculating the score in each evaluation item, a weighted average was calculated from the evaluation scores obtained by the five inspectors, and the obtained value was rounded off to two decimal places. Comprehensive evaluation was obtained by calculating a weighted average from the scores of respective evaluation items.

### (Food texture like grated vegetables)

5: Food texture with fibrous texture like grated vegetables and fresh feeling of vegetables are felt very well
4: Food texture with fibrous texture like grated vegetables and fresh feeling of vegetables are felt
3: Food texture with fibrous texture like grated vegetables and fresh feeling of vegetables are slightly felt
2: Food texture with fibrous texture like grated vegetables and fresh feeling of vegetables are poorly felt
1: Food texture with fibrous texture like grated vegetables and fresh feeling of vegetables are not felt

### (mildness in mouthfeel)

5: No roughness is felt, and mouthfeel is mild and good
4: No roughness is felt, and mouthfeel is slightly mild
3: No roughness is felt
2: Roughness is slightly felt
1: Roughness is felt

### (Sense of grated-like ingredients)

5: There is sufficient satisfaction in eating of grated-like ingredients
4: There is satisfaction in eating of grated-like ingredients
3: There is some satisfaction in eating of grated-like ingredients
2: There is poor satisfaction in eating of grated-like ingredients
1: There is no satisfaction in eating of grated-like ingredients

### (Food texture of solid onions)

5: Fibrous component is entangled with solid onions, and food texture of solid onions is brought out
4: Fibrous component is entangled with solid onions, and food texture of solid onions is felt well
3: Fibrous component is somewhat entangled with solid onions, and food texture of solid onions is felt somewhat well
2: Almost no fibrous component is entangled with solid onions, and food texture of solid onions is not brought out well
1: No fibrous component is entangled with solid onions, and food texture of solid onions is not brought out

### (3) Preservation test

The ingredient-containing liquid seasonings of the test products were preserved at 10°C or 50°C for seven days and then returned to ordinary temperature. Samples preserved at 50°C were evaluated in terms of change in "color," "smell," and "flavor" compared to samples preserved at 10°C in the same manner as in Test Example 1.

### (4) Test results

Respective results of the above-described test are shown in Table 2.

**[Table 2]**

| | Examples | | | | Comparative Examples | | | |
|---|---|---|---|---|---|---|---|---|
| | 9 | 10 | 11 | 12 | 4 | 5 | 6 | 7 |
| <Raw materials> (% by mass) | | | | | | | | |
| Apple vinegar | 10 | 10 | 10 | 10 | 10 | 10 | 10 | 10 |
| Common salt | 3 | 3 | 3 | 3 | 3 | 3 | 3 | 3 |
| Sugar | 20 | 20 | 20 | 20 | 20 | 20 | 20 | 20 |
| Brewed vinegar (acidity: 15%) | 10 | 10 | 10 | 10 | 10 | 10 | 10 | 10 |
| Xanthan gum | 0.3 | 0.3 | 0.3 | 0.3 | 0.3 | 0.3 | 0.3 | 0.3 |
| Bean curd lees powder | 2 | - | - | - | - | - | - | - |
| Powdered cellulose A | - | 2 | - | 2 | - | - | - | - |
| Powdered cellulose B | - | - | 2 | - | - | - | - | - |
| Onion juice | 5 | 5 | - | - | - | - | - | - |
| Straight radish juice | - | - | 25 | 25 | - | - | - | - |
| Onion puree | - | - | - | - | 25 | - | - | - |
| Onion powder | - | - | - | - | - | 5 | - | - |
| Grated radishes | - | - | - | - | - | - | 25 | - |
| Radish powder | - | - | - | - | - | - | - | 5 |
| Vegetable juice in terms of straight condition | 25 | 25 | 25 | 25 | - | - | - | - |
| Dried onions (solid ingredient) | 5 | 5 | 5 | 5 | 5 | 5 | 5 | 5 |
| Water | Appropriate amount | Appropriate amount | Appropriate amount | Appropriate amount | Appropriate amount | Appropriate amount | Appropriate amount | Appropriate amount |
| Total | 100 | 100 | 100 | 100 | 100 | 100 | 100 | 100 |
| Water-insoluble dietary fiber: vegetable juice | 1:12.5 | 1:12.5 | 1:12.5 | 1:12.5 | - | - | - | - |

| <Sensory evaluation (seasoning liquid)> | | | | | | | | |
|---|---|---|---|---|---|---|---|---|
| Food texture like grated vegetables | 4.5 | 5 | 5 | 5 | 4 | 1.5 | 4 | 1 |
| Mildness in mouthfeel | 5 | 4.5 | 5 | 4.5 | 2 | 2 | 2 | 1 |
| Sense of qrated-like ingredients | 5 | 4 | 4.5 | 4.5 | 3 | 2 | 2 | 1 |

| <Sensory evaluation (entire seasoning)> | | | | | | | | |
|---|---|---|---|---|---|---|---|---|
| Food texture of onions | 5 | 5 | 5 | 5 | 2 | 2.5 | 2 | 2 |

| <Preservation test (50°C, seven days)> | | | | | | | | |
|---|---|---|---|---|---|---|---|---|
| Color | 4 | 4 | 4 | 4 | 2 | 2 | 3.5 | 3.5 |
| Smell | 5 | 5 | 5 | 5 | 2 | 2 | 2 | 2 |
| Flavor | 5 | 5 | 5 | 5 | 2 | 2 | 2 | 1.5 |

As shown in Table 2, the ingredient-containing liquid seasonings of Examples 9 to 12, each of which contained a water-insoluble dietary fiber (bean curd lees powder or powdered cellulose) and a vegetable juice (onion juice or radish juice), provided food texture like grated vegetables, mild mouthfeel, and satisfaction in eating. In addition, discoloration, occurrence of off-flavor, and change in taste were little even after reservation. In addition, the fibrous component was entangled with the solid ingredients, and the food texture of the solid onion ingredients (crunchy texture) was felt well. On the other hand, in Comparative Example 4 and Comparative Example 6, each of which only included a conventional vegetable puree or conventional grated vegetables (onion puree or grated radishes), pungent mouthfeel was slightly felt, and satisfaction in eating is not sufficient. In addition, the fibrous component was not entangled with the solid ingredients, and the food texture of the solid ingredients was not brought out. In addition, in Comparative Example 5 and Comparative Example 7, each of which only included vegetable powder (onion powder or radish powder), mouthfeel and satisfaction in eating were poor, and after reservation, off-flavor was felt and the flavor was also bad.

### Industrial Applicability

The present invention can be utilized in the field of manufacturing liquid seasonings such as dressing.

All publications, patents, and patent applications cited in the present description are incorporated herein by reference in their entirety.

## Claims

1. An ingredient-containing liquid seasoning, comprising: a water-insoluble dietary fiber; and a fruit juice and/or a vegetable juice, wherein a content of the water-insoluble dietary fiber in the liquid seasoning is 0.25% to 15% by mass, and a content ratio between the water-insoluble dietary fiber and the fruit juice and/or the vegetable juice is within a range of 1:1 to 1:100 in terms of mass ratio.

2. The ingredient-containing liquid seasoning according to claim 1, wherein the water-insoluble dietary fiber is cellulose or bean curd lees powder.

3. The ingredient-containing liquid seasoning according to claim 1 or 2, further comprising a solid ingredient.

4. The ingredient-containing liquid seasoning according to claim 3, wherein the solid ingredient is a dried ingredient.

5. The ingredient-containing liquid seasoning according to claim 3 or 4, wherein the solid ingredient is contained at a content of 5% to 60% by mass based on the total seasoning in terms of wet weight.

6. A method for improving food texture of an ingredient-containing liquid seasoning, comprising allowing a water-insoluble dietary fiber and a fruit juice and/or a vegetable juice to be contained in the ingredient-containing liquid seasoning so that a content of the water-insoluble dietary fiber in the ingredient-containing liquid seasoning is 0.25% to 15% by mass and a content ratio between the water-insoluble dietary fiber and the fruit juice and/or the vegetable juice is within a range of 1:1 to 1:100 in terms of mass ratio.

7. A method for suppressing change of an ingredient-containing liquid seasoning over time during preservation, comprising allowing a water-insoluble dietary fiber and a fruit juice and/or a vegetable juice to be contained in the ingredient-containing liquid seasoning so that a content of the water-insoluble dietary fiber in the ingredient-containing liquid seasoning is 0.25% to 15% by mass and a content ratio between the water-insoluble dietary fiber and the fruit juice and/or the vegetable juice is within a range of 1:1 to 1:100 in terms of mass ratio.
